Europäisches Patentamt

European Patent Office

Office européen des brevets

(19)

(11) Veröffentlichungsnummer: **0 435 882 B1**

(12) ## EUROPÄISCHE PATENTSCHRIFT

(45) Veröffentlichungstag der Patentschrift: **10.11.93**

(51) Int. Cl.5: **G01N 29/00**

(21) Anmeldenummer: **89909540.0**

(22) Anmeldetag: **26.08.89**

(86) Internationale Anmeldenummer:
**PCT/DE89/00559**

(87) Internationale Veröffentlichungsnummer:
**WO 90/03572 (05.04.90 90/08)**

---

(54) **VORRICHTUNG ZUR ULTRASCHALLPRÜFUNG LANGGESTRECKTER, ROTATIONSSYMMETRISCHER PRÜFSTÜCKE NACH DEM EINKOPF-IMPULS-REFLEXIONSVERFAHREN.**

---

(30) Priorität: **22.09.88 DE 3832223**

(43) Veröffentlichungstag der Anmeldung:
**10.07.91 Patentblatt 91/28**

(45) Bekanntmachung des Hinweises auf die
Patenterteilung:
**10.11.93 Patentblatt 93/45**

(84) Benannte Vertragsstaaten:
**DE FR GB**

(56) Entgegenhaltungen:
**WO-A-80/01842**
**DE-A- 2 421 429**
**DE-A- 3 442 751**
**US-A- 3 777 554**

**J. KRAUTKRÄMER et al.: "Werkstoffprüfung mit Ultraschall", 4. Auflage, Mai 1980, Springer Verlag, Berlin, DE; Seiten 442-461**

(73) Patentinhaber: **KRAUTKRÄMER GmbH & Co.**
**Robert-Bosch-Strasse 3**
**D-50354 Hürth(DE)**

(72) Erfinder: **KARBACH, Bernhard**
**Mattias-Curt-Str. 1**
**D-5042 Erftstadt-Friesheim(DE)**
Erfinder: **PATZKE, Ottokar**
**Stettiner Str. 10**
**D-5042 Erftstadt-Liblar(DE)**
Erfinder: **PRAUSE, Reinhard**
**Brückenstrasse 10**
**D-5205 St. Augusting(DE)**

(74) Vertreter: **Bauer, Wulf, Dr.**
**Bayenthalgürtel 15**
**D-50968 Köln (Marienburg) (DE)**

---

EP 0 435 882 B1

**Beschreibung**

Die Erfindung betrifft eine Vorrichtung zur Ultraschallprüfung langgestreckter, rotationssymmetrischer Prüfstücke, insbesondere Rohre, aber auch Stangenmaterial, auf Materialfehler oder hinsichtlich ihrer geometrischen Daten, nach dem Einkopf-Impuls-Reflexionsverfahren. Vorrichtungsmäßig wird eine Prüfzeile aus mehreren, nämlich n, in Axialrichtung des Prüfstücks nebeneinander angeordneten Prüfköpfen relativ zum Mantel des Prüfstücks auf einer Schraubenlinie bewegt, wodurch die n-Prüfköpfe n nebeneinanderliegende, zueinander parallele Prüfspuren beschreiben.

Unter Einkopf-Impuls-Reflexionsverfahren wird hierbei verstanden, daß jeder einzelne Prüfkopf (Schwinger) der zu einer Reihe nebeneinander angeordneten Prüfköpfe Ultraschall aussendet und sein Ultraschallsignal empfängt. Bei einer Prüfkopfzeile werden beispielsweise die nebeneinander liegenden Schwinger (Einzelprüfköpfe) einzeln angeregt und empfangen einzeln. Es ist aber auch möglich, alle nebeneinander liegenden Schwinger parallel zu schalten und gleichzeitig anzuregen, sie aber separat empfangen zu lassen. Weiterhin ist eine sogenannte "gleitende Prüfzonenschaltung" bekannt.

Bei derartigen Vorrichtungen sind die Prüfköpfe entweder stationär und das Prüfstück wird schraubenlinienförmig am stationären Träger der Prüfköpfe vorbeibewegt, oder die Prüfköpfe sind in einem Rotor angeordnet, der um die Achse der Prüfstücke rotiert, die Prüfstücke werden dann nur axial durch den sich drehenden Rotor hindurchtransportiert, wodurch insgesamt wieder eine schraubenförmige Abtastbahn entsteht. Die Erfindung bezieht sich auf beide Prüfverfahren.

Die Vorrichtung der eingangs genannten Art sind bekannt aus dem Buch "Werkstoffprüfung mit Ultraschall" von J. Krautkrämer und H. Krautkrämer, Springer-Verlag, 4. Auflage 1980, Seite 456. Dort ist ausgeführt, daß man unter Beibehaltung einer hundertprozentigen Abtastdichte eine Steigerung der Prüfleistung ohne Erhöhung der Drehzahl des Rohres bzw. des Rotors erzielen kann, wenn anstelle einzelner Prüfköpfe sogenannte Zeilenprüfköpfe eingesetzt werden, die mehrere, dicht an dicht angeordnete und üblicherweise quadratische Schwinger enthalten.

Jeder einzelne Schwinger ruft, wenn er angeregt wird, am Ort des Prüfstuckes ein Schallfeld hervor, dessen effektive Schallfeldbreite von mehreren Einflußgrößen, beispielsweise dem Prüfkopftyp und der Längenausdehnung des einzelnen Schwingers in Richtung der Prüfstückachse abhängt. Die effektive Schallfeldbreite ist die Schallfeldausdehnung am Testfehler in Richtung der Prüfstückachse bezogen auf einen normierten Amplitudenabfall, beispielsweise 3 dB oder 6 dB. Die effektive Schallfeldbreite, die üblicherweise durch die kleinste, noch sicher nachzuweisende Fehlerlänge bestimmt ist, hat entscheidenden Einfluß auf die Prüfgeschwindigkeit, denn je breiter die effektive Schallfeldbreite ist, umso weniger Umdrehungen sind notwendig, um die Mantelfläche eines Prüfstücks vollständig abzudecken.

Die effektive Schallfeldbreite ist stets kleiner als die entsprechende geometrische Längsabmessung des einzelnen Schwingers. Dies führt zwangsläufig dazu, daß bei zu einer Prüfkopfzeile nebeneinander angeordneten Einzelschwingern an den den Berührungslinien der Einzelschwinger entsprechenden Orten des Prüfstücks ein Schallfeld geringerer Amplitude vorliegt als an den Orten, die dem Mittelpunkt des Einzelschwingers entsprechen. Dies ist ansich bekannt und kann dadurch ausgeglichen werden, daß (siehe DE-PS 24 21 429) separate Sender und Empfänger vorgesehen und Sender und Empfänger einander überlappend angeordnet sind. Auf ein Einkopf-Impuls-Reflexionsverfahren läßt sich diese Maßnahme jedoch nicht übertragen.

Andererseits ist es vorgeschlagen worden, die mechanischen Abmessungen der einzelnen Schwinger zu reduzieren. Dies hat zwar zur Folge, daß die Maxima der Schallfelder zweier benachbarter Einzelschwinger näher beieinanderliegen und somit der Nachweis kleinerer Fehler im Zwischenraum zwischen zwei Einzelschwingern verbessert ist, bei Schwingern mit kleinen mechanischen Abmessungen können jedoch Probleme bei dickwandigen Rohren, Rohren mit rauhen Oberflächen, bei stark schallabschwächenden Materialien sowie Probleme mit dem Impulsabstand auftreten.

Hier setzt nun die Erfindung ein. Sie hat es sich zur Aufgabe gemacht, die Vorrichtung der eingangs genannten Art dahingehend weiterzuentwickeln, daß die Reduzierung der Nachweisempfindlichkeit am der Verbindungslinie zweier benachbarter Einzelschwinger entsprechenden Ort des Prüfstücks meßtechnisch weitgehend unbeachtlich ist und auch kleine Fehler ohne Änderung der Prüfgeschwindigkeit (bezogen auf die Vorrichtung der eingangs genannten Art) erfaßt werden können. Diese Aufgabe wird gelöst durch die Merkmale des Patentanspruchs 1.

Zwar ist aus der DE-A 3 442 751 eine Vorrichtung zur Ultraschallprüfung von Prüfstücken auf Materialfehler oder hinsichtlich ihrer geometrischen Daten nach dem Einkopf-Impuls-Reflexionsverfahren bekannt, bei dem zwei Prüfkopfzeilen mit untereinander baugleichen Prüfköpfen eingesetzt werden, die bekannte Vorrichtung ist jedoch für die Prüfung von flachliegend auf einem Rollgang geförderten Blechen unterschiedlicher Breite vorgesehen. Es werden stets zwei Prüfköpfe einer Reihe kantenangrenzend auf dem zu prüfenden Blech zur Einstellung gebracht. Den Zwischenräumen zwischen den Prüfköpfen dieser Reihe sind Prüfkopfe mindestens einer weiteren, parallelen Reihe zugeordnet. Diese weiteren Reihen haben daher einen Prüfkopf weniger als die erste Reihe.

Die Erfindung lehrt somit, die zwischen zwei benachbarten Einzelschwinger fallenden Orte am Prüfstück durch eine zweite, möglichst baugleiche Prüfkopfzeile zu erfassen. Erzielt wird hierbei eine Überlappung der effektiven Schallfeldbreiten der Prüfköpfe beider Prüfkopfzeilen. Als Prüfspurmitte bzw. (präzise ausgedrückt) Prüfspurmittellinie wird diejenige Linie bezeichnet, die dem der Zentralstrahl eines Einzelschwingers auf dem Mantel des Prüfstücks beschreibt, also dem geometrischen Mittelpunkt eines Einzelschwingers auf dem Mantel des Prüfstücks entspricht. Beidseitig dieser Prüfspurmitte dehnt sich die Prüfspur oder das effektive Schallfeld aus. Entspricht seine Breite der halben geometrischen Breite der Einzelschwinger der Prüfkopfzeile, so wird durch eine zweite, zusätzliche Prüfkopfzeile mit baugleichen Prüfköpfen gerade eine vollständige, vollflächige und schraubenlinienförmige Abwicklung des Mantels ohne Einbuße an Nachweisempfindlichkeit erzielt. Bei etwas größerer effektiver Schallfeldbreite überlappen sich die Schallfeldstreifen, so daß eine gewisse Sicherheit bei Fehljustierung usw. für eine hundertprozentige Abtastdichte erhalten wird. Ist die effektive Schallfeldbreite geringer als die halbe geometrische Abmessung der Einzelschwinger, so verbleiben schraubenlinienförmige Streifen auf dem Mantel des Prüfstücks, die nicht mit derselben Nachweisempfindlichkeit abgetastet werden, wie die Bereiche der effektiven Schallfeldbreite (Prüfspur). Dies kann in einer Weiterentwicklung der Erfindung dadurch ausgeglichen werden, daß eine dritte Prüfkopfzeile usw. vorgesehen wird, die mit den beiden anderen Prüfkopfzeilen bewegungsverbunden ist, mit diesen möglichst baugleich ausgebildet ist, insbesondere die gleiche Anzahl n von Prüfköpfen aufweist und geometrisch so angeordnet ist, daß ihre Prüfköpfe sich zwischen den Prüfspurmitten der ersten und zweiten Prüfkopfzeile befinden, so daß die n Prüfspurmitten der Prüfköpfe dieser dritten Prüfkopfzeile ihrerseits Prüfspurmitten beschreiben, die gleichabständig versetzt sich jeweils zwischen einer Prüfspurmitte eines Prüfkopfes aus der ersten Zeile und der Prüfspurmitte eines Prüfkopfes aus der zweiten Zeile befinden.

Durch die zweite und eventuell dritte Prüfkopfzeile wird die Prüfgeschwindigkeit der erfindungsgemäßen Vorrichtung nicht beeinflußt, verbessert wird jedoch die Nachweisempfindlichkeit. Hierbei ist es nicht notwendig, das Prüfstück bzw. einen die Prüfköpfe tragenden Rotor schneller zu drehen als bei der Vorrichtung der eingangs genannten Art. Will man nun nicht die Prüfempfindlichkeit erhöhen, sondern diese vielmehr beibehalten, so ermöglicht die erfindungsgemäße Vorrichtung eine Verdopplung, Verdreifachung usw. der Prüfgeschwindigkeit, insbesondere wenn, wie in einer Verbesserung vorgeschlagen wird, die mindestens eine zusätzliche Prüfkopfzeile axial verschiebbar und feststellbar im Prüfkopfträger angeordnet wird. Nach entsprechender axialer Justierung der zusätzlichen Prüfkopfzeile beschreibt jede Prüfkopfzeile für sich einen schraubenlinienförnigen, ihrer Gesamtlänge entsprechenden Streifen auf dem Mantel des Prüfstücks, diese Streifen grenzen aneinander an und bedecken den Rohrnantel vollflächig. Sie verlaufen in Art eines zweigängigen (bei zwei Prüfkopfzeilen, dreigängigen (bei drei Prüfkopfzeilen) usw. Gewindes. Insgesamt wird somit der Vorzug erreicht, daß die erfindungsgemäße Vorrichtung entweder mit höherer Fehlerauflösung oder und wahlweise mit höherer Prüfgeschwindigkeit arbeitet. Im letzteren Fall wird bei Beibehaltung der Drehzahl des Rotors die lineare Vorschubgeschwindigkeit des Prüfstücks verdoppelt (bei zwei Prüfkopfzeilen) verdreifacht (bei drei Prüfkopfzeilen) usw.

Eine derartige axiale Einstellbarkeit der zweiten (bzw. dritten usw.) Prüfkopfzeile gegenüber der ersten ist besonders vorteilhaft bei Prüfkopfzeilen mit wenigen Einzelprüfköpfen, beispielsweise n = 2 oder 3. Hier kann in einer bevorzugten Weiterbildung der Erfindung für die axiale Einstellung auch vorgesehen sein, daß innerhalb des Prüfkopfträgers für die betreffende Prüfkopfzeile ein exzentrisches Teil vorgesehen ist, das unten die Prüfkopfzeile trägt und um eine Achse verdreht werden kann, die einen (mittleren) Prüfkopf auf einem Teil seiner Gesamtlänge durchsetzt. Bei zwei Prüfkopfzeilen, die im Winkelversatz $\beta$ = 180° zueinander versetzt sind, beträgt die Exzentrizität 1/4 des Mittenabstandes b zweier benachbarter Einzelschwinger.

Bei Prüfkopfzeilen mit einer größeren Anzahl Einzelschwinger, beispielsweise n = 6, 7 oder 8, ist eine geometrische Verschiebung in Axialrichtung zwar immer noch vorteilhaft, wenn die erfindungsgemäße Vorrichtung vom Zustand hoher Nachweisempfindlichkeit (mit einander kämmenden Prüfspurmitten der Prüfköpfe der einzelnen Prüfkopfzeilen) in den Zustand hoher Prüfgeschwindigkeit (mit aneinandergrenzenden, schraubenlinienförnigen Streifen beschrieben jeweils durch eine Prüfkopfzeile) umgestellt wird, der mechanische Aufwand der Axialverstellung kann in einer verschlechterten Ausführung, die sich bei hoher Prüfkopfzahl n pro Prüfkopfzeile anbietet, entfallen, wenn eine gewisse Überlappung der einzelnen, von den Prüfkopfzeilen beschriebenen Streifen in Kauf nimmt, was zu einer gewissen Verringerung der linearen Vorschubgeschwindigkeit des Prüfstückes führt (wenn die Drehzahl beibehalten bleibt.

Der axiale Versatz d zwischen den Prüfkopfzeilen kann innerhalb des Wertes b, also des Mittenabstandes benachbarter Prüfköpfe liegen, aber auch um ein beliebiges Vielfaches der Periode des Prüfvorgangs größer sein. Wenn der Versatz d innerhalb des Wertes b für den Mittenabstand zweier benachbarter Schwinger liegt, wird erreicht, daß der ungeprüft bleibende Bereich am Anfang und am Ende eines Prüfstücks möglichst kurz bleibt. Je größer der axiale Versatz d ist, umso größer sind die ungeprüften Zwickel der Endbereiche. Zugleich wird bei kleinem axialen Versatz d eine präzisere Zuordnung der Prüfspurenmitten beider Prüfkopfzeilen erreicht. Bei größerem axialen Versatz d kann durch geringfügige Abweichungen bei den Transportbewegungen eine exakte Mittelpositionierung der beiden Prüfspurfelder zueinander erschwert werden.

In einer ersten, bevorzugten Ausbildung der erfindungsgemäßen Vorrichtung sind zwei Prüfkopfzeilen vorgesehen, die um den Winkel $\beta$ = 180° gegeneinander versetzt sind. Der Axialversatz d kann in diesem Fall Null betragen, wenn die Anzahl n der Prüfköpfe jeder Prüfkopfzeile ungerade ist. Ist n geradzahlig, muß der Versatz d der halben Länge eines Einzelschwingers entsprechen.

In einem zweiten, bevorzugten Ausführungsbeispiel sind drei baugleiche Prüfkopfzeilen vorgesehen, die zueinander um den Winkel $\beta$ = 120° versetzt sind. Ihr Axialversatz d zueinander beträgt b/3, also 1/3 des Mittenabstandes zweier benachbarter Einzelschwinger.

In einer besonders bevorzugten Ausführung sind die Einzelschwinger jeder Prüfkopfzeile untereinander und miteinander baugleich, insbesondere haben sie baugleiche Länge (in Richtung der Prüfstückachse gemessen).

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser zeigen:

Fig. 1    ein axiales Schnittbild durch eine Vorrichtung zur Ultraschallprüfung in Form eines Rotors für die Prüfung von Rohren,

Fig. 2    ein Schnitt entlang der Schnittlinie II - II in Fig. 1,

Fig. 3    eine schematische Darstellung einer Abwicklung eines Rohrmantels und Abtastung durch zwei Prüfkopfzeilen,

Fig. 4    eine Darstellung entsprechend Fig. 3 jedoch für den Fall eines Winkelversatzes $\beta$ = 180°,

Fig. 5    eine schematische Darstellung eines Schallfelddiagramms einer Prüfkopfzeile aus vier Einzelschwingern,

Fig. 6    eine Darstellung entsprechend Fig. 5 für den Fall zweier identischer, überlappend angeordneter Prüfkopfzeilen mit jeweils vier Einzelschwingern und

Fig. 7    ein Prüfkopfträger mit einer Zeile aus zwei Prüfköpfen, die exzentrisch an einem Halter, der verdrehbar im Träger angeordnet ist, befestigt sind.

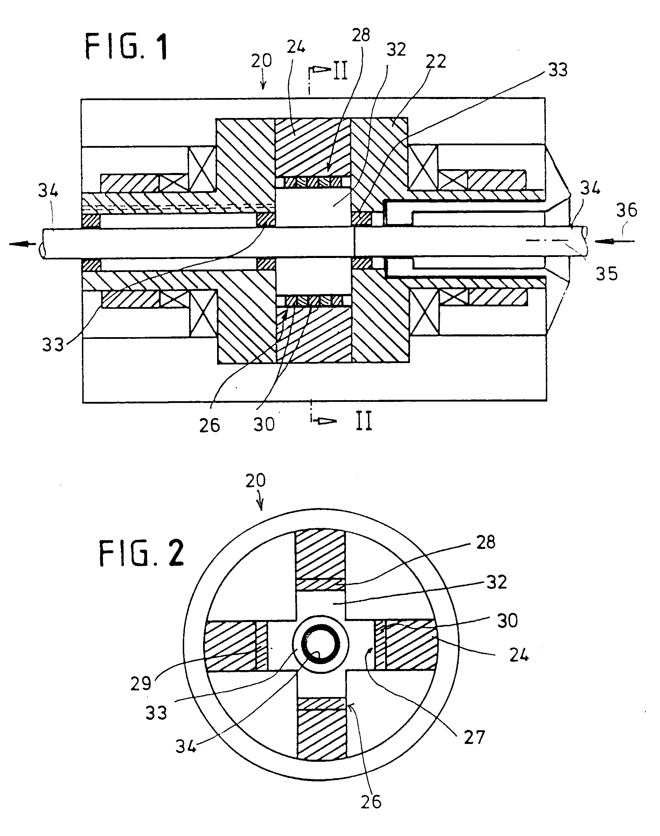

Die aus den Figuren 1 und 2 ersichtliche Vorrichtung hat einen Rotor 20, in dessen Gehäuse 22 vier einzelne, um $\beta$ = 90° gegeneinander versetzte Prüfkopfträger 24 radial verstellbar angeordnet sind, die jeweils eine Prüfkopfzeile 26 bis 29 tragen. Letztere sind untereinander baugleich und bestehen aus jeweils fünf, wiederum untereinander baugleichen Einzelprüfköpfen bzw. Schwingern 30, die quadratisch oder rechteckförmig sind, aber auch rund, trapezförmig sein oder eine andere Form haben können, und - im hier gezeigten Ausführungsbeispiel - unmittelbar aneinander angrenzen, in anderer Ausführung können sie auch zwischen sich einen Spalt freilassen. Die Prüfkopfzeilen 26 bis 29 befinden sich in einer Ankopplungskammer 32, die axial abgedichtet ist (Dichtungen 33). Durch den Rotor hindurch werden linear die Prüfstücke 34 transportiert, die Prüfstückachse trägt das Bezugszeichen 35, die Transportrichtung ist durch den Pfeil 36 angegeben. Im gezeigten Zustand ist die Prüfung des vorderen Prüfstücks 34 (links) gerade abgeschlossen, als nächstes folgt die Prüfung des rechten Prüfstücks 34.

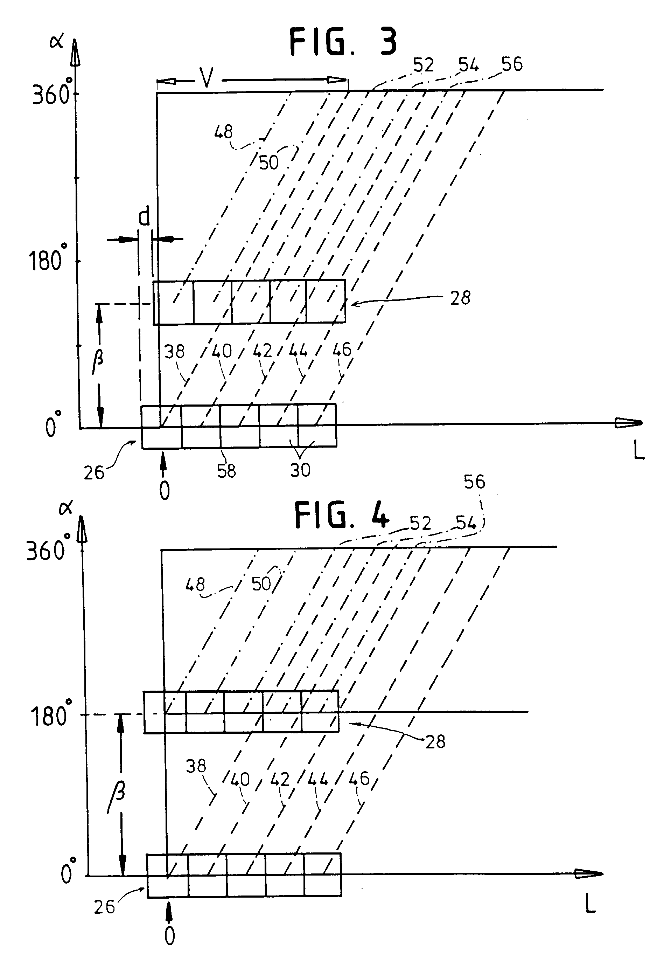

Anhand der schematischen Darstellungen gemäß den Figuren 3 und 4 soll die Arbeitsweise einer Vorrichtung, wie sie anhand der Figuren 1 und 2 erläutert wurde, nun im einzelnen beschrieben werden. Zur Vereinfachung sind jedoch nicht vier, sondern nur zwei Prüfkopfzeilen 26 und 28 vorgesehen und wird auf die Ausweitung auf vier bzw. drei oder mehrere in der Beschreibung eingegangen.

Mit dem Winkel alpha ist in den beiden Figuren 3 und 4 der Abwicklungswinkel bezeichnet, ein Winkel von 360° entspricht einer vollständigen Abwicklung und damit dem Ort des Winkels Null. Auf der Abszisse ist die Länge L des abgewickelten Prüfstücks aufgetragen. Dargestellt ist der Zustand beim Beginn einer Abtastung, also bei L = Null. Die erste Prüfkopfzeile 26 ist bei einem Winkel 0° angeordnet, die zweite ihr gegenüber um den Winkel $\beta$ versetzt. Zugleich ist die zweite Prüfkopfzeile 28 gegenüber der ersten axial um den Versatz d versetzt.

Die erste, aus fünf baugleichen Einzelprüfköpfen 30 zusammengesetzte Prüfkopfzeile 26 beschreibt beim Abtasten des Rohrmantels eine schraubenlinienförmige Schar von parallelen Prüfspurmitten, wobei als Prüfspurmitte der dem geometrischen Mittelpunkt jedes Einzelprüfkopfes 30 entsprechende Ort auf dem Prüfstück 34 verstanden wird. In der Abwicklung erscheinen die insgesamt fünf Prüfspurmitten als schräg verlaufende, zueinander parallele Geraden 38 bis 46. In ansich bekannter Weise entspricht der axiale Vorschub V pro Umdrehung der geometrischen Länge (in Richtung der Achse L) der Prüfkopfzeile 26. Dadurch wird erreicht, daß bei Weiterführung der schraubenlinienförmigen Abtastung die Prüfspurmitte 38 des ersten Einzelprüfkopfes sich gleichabständig und so an die Prüfspurmitte 46 des letzten Prüfkopfes anschließt, wie die einzelnen Prüfspuren 38 bis 46 zueinander stehen. Die Prüfkopfzeile 26 tastet daher den Mantel des Prüfstücks 34 auf streifenförmigen Bahnen ab, deren Ränder aneinandergrenzen, so daß eine vollständige (bis auf die Endbereiche, wie aus den Figuren ersichtlich) flächenhafte Abtastung erzielt wird.

Erfindungsgemäß ist die zweite Prüfkopfzeile 28 so angeordnet, daß sich die geometrischen Mittelpunkte ihrer Einzelschwinger mittig zwischen den Prüfspurmitten 38 bis 46 der ersten Prüfkopfzeile 26 befinden. Im Beispiel nach Fig. 3 ist ein beliebiger Wert für den Winkel β angenommen, der Axialversatz d ist so gewählt, daß die Mittelpunkte der Einzelschwinger mittig zwischen der Schar der parallelen Prüfspurmitten 38 bis 46 liegen. Dadurch beschreibt die zweite Prüfkopfzeile 28 ihrerseits Prüfspurmitten 48 bis 56, die zur besseren Unterscheidung von den gestrichelten Prüfspurmitten 38 bis 46 strichpunktiert dargestellt sind. Die Figur läßt erkennen, daß die entsprechende Parallelenschar sich mittig in der Parallelenschar der Prüfspurmitten 38 bis 46 befindet.

In Fig. 4 ist der Fall β = 180° dargestellt, der ein Sonderfall ist, weil hier der axiale Versatz d den Wert Null haben kann, falls eine ungradzahlige Anzahl von Einzelprüfköpfen 30 in jeder Prüfkopfzeile enthalten ist und ein Prüfvorschub entsprechend der Länge V einer Prüfkopfzeile gewählt wird. Bei gradzahliger Anzahl n muß ein Versatz um eine halbe Einzelprüfkopfbreite 30 bewählt werden. Ansonsten liegen wiederum dieselben Verhältnisse wie gemäß Fig. 3 vor.

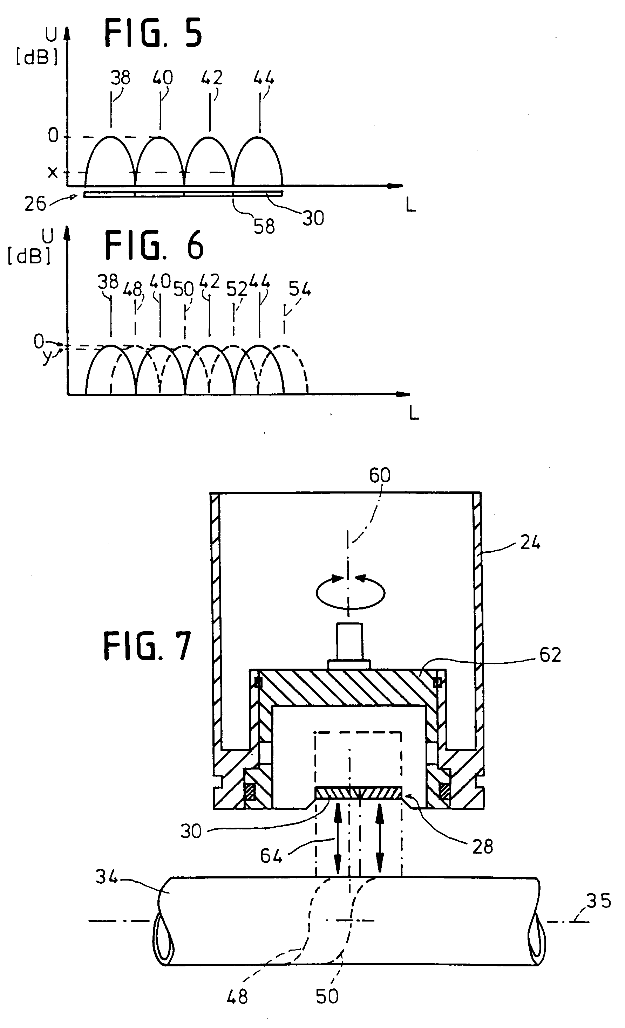

Fig. 5 zeigt Schallfelddiagramm einer Prüfkopfzeile 26 mit vier Einzelprüfköpfen, aufgetragen ist die Schallamplitude U über dem Ort L. Man erkennt die Einbrüche der Schallamplitude an den Berührungsstellen 58 der Einzelprüfköpfe. Fig. 6 zeigt, wie durch eine zweite, baugleiche Prüfkopfzeile, die gegenüber der ersten versetzt ist, die Schallamplitude über den Ort ausgeglichen werden kann, die Schwankungen sind nun wesentlich geringer als im Beispiel nach Fig. 5. Der Fall nach Fig. 5 entspricht dem Stand der Technik, Fig. 6 zeigt die Erfindung. In Fig. 5 ist eine Linie x dB eingezeichnet, die einer vorgegebenen Nachweisempfindlichkeit entspricht, die entsprechende Linie in Fig. 6 ist eingezeichnet bei y dB. Der Vergleich beider Werte zur 0 dB-Linie läßt erkennen, daß im Ausführungsbeispiel nach Fig. 6 eine geringere Gesamtverstärkung des nachgeschalteten Verstärkers zur gleichen Nachweisempfindlichkeit notwendig ist als im Ausführungsbeispiel nach Fig. 5.

In den Figuren 5 und 6 sind auch die Prüfspurmitten eingezeichnet, Fig. 5 zeigt die vier Prüfspurmitten 38, 40, 42 und 44, die den Maxima der Schallfelder zugeordnet sind, entsprechend sind in der Fig. 6 noch die Prüfspurmitten 48, 50, 52 und 54 zusätzlich eingezeichnet.

Fig. 7 schließlich zeigt ein Schnittbild durch einen Prüfkopfträger 24, in dem um eine Achse 60 drehbar abgedichtet ein Halter 62 angeordnet ist. Er trägt an seiner Unterseite eine Prüfkopfzeile 28 mit zwei Einzelprüfköpfen. Die Strahlrichtung ihrer geometrischen Mitten und entsprechend die Empfangsrichtung ist durch jeweils einen Doppelpfeil 64 angedeutet. Entsprechend der bisherigen Nomenklatur liegen auf den unteren Pfeilspitzen die Prüfspurmitten 48 und 50, die in der hier gewählten Darstellung S-förmig verlaufen. Durch Drehen des Halters 62 um die Achse 60 kann nun der axiale Versatz d um eine Strecke geändert werden, die der halben Länge eines Einzelprüfkopfes 30 entspricht. Dies wird dadurch erreicht, daß die Drehachse 60 gegenüber der geometrischen Mitte der Prüfkopfzeile 28 um 25 % des Mittenabstandes b der beiden Einzelprüfköpfe 30 versetzt ist, die Exzentrizität also 1/4 des Mittenabstandes b der benachbarten Prüfköpfe 30 beträgt. Im Ausführungsbeispiel gemäß Fig. 7 ist der Winkelversatz β = 180°, da die Anzahl der Prüfköpfe n = 2 eine gerade Zahl ist, muß, wie oben beschrieben, ein Axialversatz d der halben Einzelschwingerlänge vorgenommen werden, um von einer Abtastung mit hoher Fehlerauflösung zu einer Abtastung mit hoher Prüfgeschwindigkeit umschalten zu können.

**Patentansprüche**

1. Vorrichtung zur Ultraschallprüfung langgestreckter, rotationssymmetrischer Prüfstücke (34), insbesondere Rohre, auf Materialfehler oder hinsichtlich ihrer geometrischen Daten, nach dem Einkopf-Impuls-Reflexionsverfahren, bei dem eine Prüfkopfzeile (26), die an einem Prüfkopfträger (24) gehalten ist und aus n in Axialrichtung des Prüfstücks (34) nebeneinander angeordneten, untereinander baugleichen Prüfköpfen (30) besteht, relativ zum Mantel des Prüfstücks (34) auf einer Schraubenlinie bewegt wird, wodurch die n Prüfköpfe (30) n nebeneinanderliegende, zueinander parallele Prüfspurmitten (38 bis 46) beschreiben, dadurch gekennzeichnet, daß am Prüfkopfträger (24) eine zweite Prüfkopfzeile (28) vorgesehen ist, die mit der ersten Prüfkopfzeile (26) baugleich ist, insbesondere die gleiche Anzahl n von Prüfköpfen (30) aufweist, die gegenüber der ersten Prüfkopfzeile (26) in Umfangsrichtung versetzt angeordnet ist und die geometrisch so angeordnet ist, daß der axiale Versatz d beider Prüfkopfzeilen (26, 28) kleiner ist als der Mittenabstand b zweier benachbarter Prüfköpfe (30) und ihre Prüfköpfe (30) sich zwischen den Prüfspurmitten (38 bis 46) der ersten Prüfkopfzeile (26) befinden, so daß im Betrieb der Vorrichtung die n Prüfköpfe (30) der zweiten Prüfkopfzeile (28) ihrerseits Prüfspurmitten (48 bis 56) beschreiben, die zwischen den Prüfspurmitten (38 bis 46) der Prüfköpfe der ersten Prüfkopfzeile liegen.

2. Vorrichtung nach Anspruch 1, dadurch gekennzeichnet, daß sich bei insgesamt zwei Prüfkopfzeilen (26, 28) im Betrieb der Vorrichtung jede Prüfspurmitte (z. B. 38) der einen Zeile (z. B. 26) mittig zwischen zwei Prüfspurmitten (z. B. 52 und 54) der anderen Prüfkopfzeile (z. B. 28) befindet, und daß allgemein bei mehr als zwei Prüfkopfzeilen (26, 28, 27 usw.) im Betrieb der Vorrichtung die Prüfspurmitte eines Kopfes einer Prüfzeile (z. B. 28) mittig zwischen der unmittelbar auf einer Seite benachbarten Prüfspurmitte einer Zeile (26) und der unmittelbar auf der anderen Seite benachbarten Prüfspurmitte der anderen Zeile (z. B. 27) liegt.

3. Vorrichtung nach einem der Ansprüche 1 oder 2, dadurch gekennzeichnet, daß die Prüfkopfzeilen (26, 28 usw.) an einem gemeinsamen Prüfkopfträger (24) gehalten sind und die zusätzlichen Prüfkopfzeilen (28, 27 usw.) gegenüber der ersten Prüfkopfzeile (26) in Axialrichtung (35) verschiebbar und einstellbar angeordnet sind.

4. Vorrichtung nach Anspruch 1 oder 2, dadurch gekennzeichnet, daß der Axialversatz d von zwei Prüfkopfzeilen (26, 28) den Wert

$$d = b \times \frac{\beta}{360°}$$

hat, wobei b der in Axialrichtung (35) gemessene Mittenabstand zweier benachbarter Prüfköpfe (30) und $\beta$ der Winkel ist, um den die beiden Prüfkopfzeilen in der Radialebene gegeneinander versetzt angeordnet sind.

5. Vorrichtung nach einem der Ansprüche 1 bis 4, dadurch gekennzeichnet, daß der Axialversatz d von zwei Prüfkopfzeilen (26, 28) den Wert d = 0 hat, wenn der Winkel $\beta$, um den die beiden Prüfkopfzeilen (26, 28) gegeneinander versetzt sind, den Wert $\beta$ = 180° hat und die Anzahl n der Prüfköpfe (30) jeder Prüfkopfzeile (26, 28) ungeradzahlig ist.

6. Vorrichtung nach einem der Ansprüche 1 bis 5, dadurch gekennzeichnet, daß die Prüfkopfzeilen (26, 28, 27 usw.) gleichwinklig versetzt über den 360°-Umfang des Prüfstücks verteilt angeordnet sind.

7. Vorrichtung nach einem der Ansprüche 1 bis 6, dadurch gekennzeichnet, daß die zwei Prüfkopfzeilen (26, 28) in Umfangsrichtung um den Winkel $\beta$, dessen Scheitelpunkt auf der Prüfstückachse (35) liegt, versetzt angeordnet sind.

8. Vorrichtung nach einem der Ansprüche 1 bis 7, dadurch gekennzeichnet, daß ein Halter (62) im Prüfkopfträger (24) um eine Drehachse (60), die rechtwinklig zur Prüfstückachse (35) verläuft, drehbar ist und die Drehachse (60) die Prüfkopfzeile (28) versetzt von ihrer geometrischen Mitte schneidet.

## Claims

1. Device for the ultrasonic inspection of elongated, rotation-symmetrical test-pieces (34), in particular pipes, for material defects or with regard to their geometrical data, by the single-probe pulse reflection process, in which a probe array (26) - which is installed on a probe mount (24), and which consists of a row of **n** probes (30) of identical construction installed axially next to one another in relation to the test-piece (34) - is moved along a helical line in relation to the shell of the test-piece (34), so that the **n** probes (30) describe **n** measurement tracks, the centres of said measurement tracks (38 - 46) lying next to one another and parallel to one another; characterised by the fact that a second probe array (28) is provided on the probe mount (24), said second probe array (28) being identical in construction to the first probe array (26), and in particular having the same number **n** of probes (30) and being offset circumferentially from the first probe array (26) and arranged geometrically in such a way that the axial offset **d** between the two probe arrays (26, 28) is smaller than the distance **b** between the centres of two neighbouring probes (30), and by the fact that the probes (30) of the second probe array (28) are located between the measurement track centres (38 - 46) of the first probe array (26), so that in operation the **n** probes (30) of the second probe array (28) describe measurement tracks whose centres (48 - 56) lie between the measurement track centres (38 - 46) of the probes (30) in the first probe array (26).

2. Device as claimed in Claim 1, characterised by the fact that when the device is operated, each measurement track centre (e.g. 38) of the one array (e.g. 26) lies in the centre between two measurement track centres (e.g. 52 and 54) of the other probe array (e.g. 28) when there are a total of two probe arrays (26, 28); and that when there are more than two probe arrays (26, 28, 27 etc.) and the device is operated, the measurement track centre of a probe in one probe array (e.g. 28) generally lies in the centre between the directly neighbouring measurement track centre of one array (26) and the directly neighbouring measurement track centre of the other array (e.g. 27).

3. Device as claimed in Claims 1 or 2, characterised by the fact that the probe arrays (26, 28 etc.) are mounted on a common probe mount (24), and that the additional probe arrays (28, 27 etc.) are installed in such a way that they can be axially (35) shifted and adjusted in relation to the first probe array (26).

4. Device as claimed in Claims 1 or 2, characterised by the fact that the axial offset **d** between two probe arrays (26, 28) has the value

$$d = b \times \frac{\beta}{360°}$$

where **b** is the axial (35) centre-to-centre distance measured between two neighbouring probes (30) and $\beta$ is the angle by which the two probe arrays are offset in relation to one another in the radial plane.

5. Device as claimed in any of the Claims 1 through 4, characterised by the fact that the axial offset **d** between two probe arrays (26, 28) has the value d = 0 when the angle $\beta$ by which the two probe arrays (26, 28) are offset in relation to one another has the value $\beta$ = 180° and the number **n** of probes (30) in each probe array (26, 28) is odd.

6. Device as claimed in any of the Claims 1 through 5, characterised by the fact that the probe arrays (26, 28, 27 etc.) are offset from another by equal angles around the 360° circumference of the test-piece.

7. Device as claimed in any of the Claims 1 through 6, characterised by the fact that the two probe arrays (26, 28) are offset circumferentially from another by the angle $\beta$, the vertex of which lies on the axis (35) of the test-piece.

8. Device as claimed in any of the Claims 1 through 7, characterised by the fact that there is a holder (62) in the probe mount (24), said holder (62) being rotatable around an axis of rotation (60) that is perpendicular to the test-piece axis (35), and that the axis of rotation intersects the probe array (28) at a point offset from its geometrical centre.

**Revendications**

1. Procédé pour le contrôle ultrasonique d'objets allongés à symétrie de révolution (34), et notamment de tuyaux, quant à la présence de défauts de matériaux ou du point de vue de leurs caractéristiques géométriques, par le procédé de réflexion d'impulsions monopalpeur, pour lequel une ligne de palpeurs (26) maintenue sur un support de palpeurs (24) et qui se compose de n palpeurs (30) de construction identique et juxtaposés dans le sens axial de l'objet (34) est déplacée de manière relative par rapport à l'enveloppe de l'objet (34) sur une ligne hélicoïdale, suite à quoi les n palpeurs (30) décrivent n médianes de traces (38 à 46) juxtaposées et parallèles entre elles, caractérisé par le fait qu'une deuxième ligne de palpeurs (28) est prévue sur le support de palpeurs (24), que cette ligne est identique à la première (26) et qu'elle comporte notamment le même nombre n de palpeurs (30) et qui, comparée à la première ligne de palpeurs (26) est décalée dans le sens du pourtour et géométriquement disposée de manière que le décalage axial d des deux lignes de palpeurs (24, 26) soit inférieur à l'écartement b de deux palpeurs voisins (30) et que leurs palpeurs (30) se trouvent entre les médianes de traces (38 à 46) de la première ligne de palpeurs (26) de sorte que, lorsque le dispositif est en marche, les n palpeurs (30) de la deuxième ligne de palpeurs (28) décrivent à leur tour des médianes de traces (48 à 56) qui se trouvent entre celles (38 à 46) des palpeurs de la première ligne de palpeurs.

2. Procédé selon la revendication 1, caractérisé par le fait que, avec au total deux lignes de palpeurs (26, 28), lorsque le dispositif est en marche, chaque médiane de traces (p. ex. 38) d'une ligne (p. ex. 26) est centrée entre deux médianes de traces (p. ex. 52 et 54) de l'autre ligne de palpeurs (p. ex. 28) et que, en général, lors de plus de deux lignes de palpeurs (26, 28, 27, etc.), lorsque le dispositif est en marche, la médiane de traces d'un palpeur d'une ligne de palpeurs (p. ex. 28) est centrée par rapport à la prochaine médiane de traces voisine d'un côté d'une ligne (26) et la prochaine médiane de traces voisine de l'autre côté de l'autre ligne (p. ex. 27).

3. Procédé selon la revendication 1 ou 2, caractérisé par le fait que les lignes de palpeurs (26, 28, etc.) sont maintenues sur un support de palpeurs commun (24) et que les lignes de palpeurs supplémentaires (28, 27, etc.) sont montées de manière à pouvoir être décalées dans le sens axial (35) et réglées par rapport à la première ligne de palpeurs (26).

4. Procédé selon la revendication 1 ou 2, caractérisé par le fait que le décalage axial d de deux lignes de palpeurs (26, 28) a la valeur

$$d = b \times \frac{\beta}{360°},$$

b représentant l'écartement mesuré dans le sens axial (35) entre deux palpeurs voisins (30) et $\beta$ étant l'angle sur lequel les deux lignes de palpeurs sont disposées décalées entre elles sur le plan radial.

5. Procédé selon l'une des revendications 1 à 4, caractérisé par le fait que le décalage axial d de deux lignes de palpeurs (26, 28) a la valeur d = 0 lorsque l'angle $\beta$, sur lequel les deux lignes de palpeurs (26, 28) sont decalées l'une par rapport à l'autre, a la valeur 180° et que le nombre n de palpeurs (30) de chaque ligne de palpeurs (26, 28) est impair.

6. Procédé selon l'une des revendications 1 à 5, caractérisé par le fait que les lignes de palpeurs (26, 28, 27, etc.) sont décalées équilatéralement sur le pourtour de 360° de l'objet.

7. Procédé selon l'une des revendications 1 à 6, caractérisé par le fait que les deux lignes de palpeurs (26, 28) sont disposées dans le sens du pourtour de manière décalée de l'angle $\beta$ dont le point d'intersection se trouve sur l'axe de l'objet (35).

8. Procédé selon l'une des revendications 1 à 7, caractérisé par le fait qu'un appui (62) du support de palpeurs (24) tourne autour d'un axe de rotation (60) perpendiculaire à l'axe de l'objet (35) et que l'axe de rotation (60) coupe la ligne de palpeurs (28) décalée de son centre géométrique.

# FIG. 1

# FIG. 2

# FIG. 3

# FIG. 4

# FIG. 5

# FIG. 6

# FIG. 7